# EUROPÄISCHE PATENTANMELDUNG

(11) **EP 4 748 549 A1**
(43) Veröffentlichungstag der Anmeldung: **27.05.2026**
(21) Anmeldenummer: 25217267.1
(22) Anmeldetag: 20.11.2025
(51) Int. Cl.: B29C 45/17

(54) **SPRITZGIESSEINHEIT FÜR EINE SPRITZGIESSMASCHINE MIT EINER DÜSENFAHREINHEIT SOWIE DÜSENFAHREINHEIT**

(30) Priorität: 23.11.2024 DE 102024134559
(71) Anmelder: ARBURG GmbH + Co KG, 72290 Loßburg (DE)
(72) Erfinder: BLETSCHER, Rainer, 72270 Baiersbronn (DE)
(74) Vertreter: RPK Patenanwälte Reinhardt und Kaufmann Partnerschaft mbB (Pforzheim)

(57) **Zusammenfassung**

Spritzgießeinheit (20) für eine Maschine (10) zur Verarbeitung von Kunststoffen und anderen plastifizierbaren Materialien, insbesondere für eine Spritzgießmaschine, eingerichtet zum Zuführen von in einem Plastifizierzylinder (22) plastifizierten Material in eine Spritzgießform (16), die zwischen Formträgern (18) aufnehmbar ist, mit wobei die Spritzgießeinheit (20) mindestens eine Düsenfahreinheit (14) aufweist, die dafür eingerichtet ist, im Betriebszustand der Spritzgießmaschine (10) eine Düse (12) der Spritzgießeinheit (20) an eine Spritzgießform (16) und/oder einen Formträger (18) anzulegen,

wobei die mindestens eine Düsenfahreinheit (14) einerseits an der Spritzgießeinheit (20) und andererseits an einem relativ zur Spritzgießeinheit (20) stationären Teil der Spritzgießmaschine (10) lagerbar ist,

dadurch gekennzeichnet,

dass die mindestens eine Düsenfahreinheit (14) im Betriebszustand drückend und/oder ziehend so einbaubar ist, dass sie die Spritzgießeinheit mit der Düse (12) in Anlage an die Spritzgießform (16) und/oder den Formträger (18) drückt und/oder zieht,

dass die mindestens eine Düsenfahreinheit (14) im Bereich eines Aufnahmeelements (30) mit der Spitzgießeinheit (20) wirkverbunden ist und

dass die mindestens eine Düsenfahreinheit (14) eine an der Spritzgießeinheit (20) und dem relativ zur Spritzgießeinheit (20) stationären Teil gelagerte bauliche Einheit ist, die aus einer die Spritzgießeinheit (20) in die Anlage drückenden Stellung aus Sicht des Plastifizierzylinders (22) hinter dem Aufnahmeelement (30) in eine die Spritzgießeinheit (20) in die Anlage ziehende Stellung vor dem Aufnahmeelement (30) überführbar ist.

## Beschreibung

Die Erfindung betrifft eine Spritzgießeinheit für eine Maschine zur Verarbeitung von Kunststoffen und anderen plastifizierbaren Materialien, insbesondere für eine Spritzgießmaschine, mit mindestens einer Düsenfahreinheit sowie eine Düsenfahreinheit an einer Spritzgießeinheit.

Der Begriff "plastifizierbares Material", wie er hier verwendet wird, ist weit zu verstehen und umfasst insbesondere, aber nicht nur, neben Kunststoffen oder auch Silikon oder anderen thermoplastischen und/oder elastomeren Werkstoffen z.B. keramische, metallische und/oder pulverige bzw. pulverartige Massen ebenso wie Papier, Cellulose, Stärke, Kork, usw. sowie auch Mischmaterialen zwischen derartigen plastifizierbaren Materialien. Grundsätzlich kann es sich dabei auch um bereits zuvor plastifizierte Materialien oder auch plastische Massen handeln, die nach dem Ausbringen selbsttätig oder unter Einsatz von Hilfsmitteln aushärten. Der Begriff umfasst auch Recyclate.

Das Bewegen einer Düse, in der Regel am Plastifizierzylinder einer Spritzgießeinheit angeordnet, ist im Spritzgießverfahren eine untergeordnete Bewegung, die auf der Seite der Spritzgießeinheit vorgesehen ist. Es muss sichergestellt werden, dass die Düsenspitze am Spritzgießwerkzeug mit Druck anliegt, damit es beim Einspritzen von Material nicht zu unkontrolliertem Materialaustritt an der Übergabestelle zwischen Plastifiziereinheit und Spritzgießwerkzeug kommt. Im Reinigungsfall sollte die Düse so weit zurückgefahren werden können, dass die Düsenspitze außerhalb der Werkzeugplatte, d. h. außerhalb des Formträgers positioniert ist, sodass der Bediener die Düsenspitze mit Reinigungswerkzeug bequem reinigen kann.

Bei Verwendung von speziellen Düsengeometrien wie zum Beispiel einer Tauchdüse ist es wichtig, dass die Düsenanlagekraft möglichst zentrisch zur Düsenspitze aufgebracht wird, damit der Düsenkörper in seinem Aufnahmekanal nicht verkantet und es damit zu Beschädigungen am Spritzgießwerkzeug kommt. Bei der Verwendung von Radiusdüsen ist auch bei asymmetrischen Düsenanlagekrafteinleitungen und einer damit einhergehenden Verkippung der Spritzgießeinheit ein reibungsloser Prozess gewährleistet. Die von der asymmetrisch eingeleiteten Kraft ausgehende Verformung der SPE muss aber über geeignete Maßnahmen möglichst minimal gehalten werden.

Der Vorteil einer nicht zentrischen Düsenanlagekrafteinleitung liegt zum einen an der Bauteilreduktion und der bessern Zugänglichkeit zur Plastifiziereinheit und Düse. Bei am Markt befindlichen Systemen greift die asymmetrische Düsenanlagekraft mittig unter der Plastifiziereinheit an der stationären Werkzeugplatte an. Diese Ausführungsform hat den Nachteil, dass aufgrund der zentrischen Befestigung mittig unter der Plastifiziereinheit es beim Leerspritzen des Plastifizierzylinders im Reinigungsfall häufig zu Verunreinigungen an dieser Verbindungsstelle kommt.

Die DE 20 2006 012 268 U1 zeigt ein Einspritzaggregat, welches mit einer Antriebseinheit sowie einem im hinteren Teil angeordneten Antriebsblock auf Linearführungen in Bezug auf einen Maschinenständer einer Spritzgießmaschine axial verfahrbar ist. Die Anpresskraft des Plastifizierzylinders an der Spritzgießform wird von einem Anpress- und Verschiebeantrieb aufgebracht. Das Einspritzaggregat weist eine Zylinderabstützung im Kopfbereich des Plastifizierzylinders auf und die Anpresskraft ist momentfrei auf den Plastifizierzylinder einleitbar. Die Düsenanlegekraft kann drückend aufgebracht werden.

Die JP H09-267352 A offenbart eine elektrische Spritzgießmaschine mit einer Einspritzvorrichtung mit einem Elektromotor, einer Plastifiziervorrichtung, einer Einspritzeinheit und einer Antriebsvorrichtung zum Vorwärts- und Rückwärtsfahren der Einspritzvorrichtung. Die Einspritzvorrichtung ist auf einer Schwenkplatte angeordnet, die drehbar auf einem Maschinenständer der elektrischen Spritzgießmaschine angeordnet ist und die Reinigung der Spritzgießmaschine erleichtert.

Die DE 10 2009 012 482 A1 zeigt eine Spritzgießeinheit für eine Spritzgießmaschine zur Verarbeitung von Kunststoffen und anderen plastifizierbaren Massen. Durch eine Düsenfahreinheit, die parallel zur Spritzachse und auf beiden Seiten eines Plastifizierzylinders angeordnet und durch eine Kolbenzylindereinheit gebildet ist, deren Kolben auf Holmen gelagert ist, wird die Spritzgießeinheit an einen Formträger und einen Anguss für einen Hohlraum in einer Spritzgießform angelegt.

Ausgehend von diesem Stand der Technik ist es Aufgabe der Erfindung, eine Spritzgießeinheit oder eine Düsenfahreinheit für eine Spritzgießeinheit bereitzustellen, durch die eine bessere Zugänglichkeit der Spritzgießeinheit gewährleistet ist.

Diese Aufgabe wird mit einer Spritzgießeinheit mit den Merkmalen des Anspruches 1 oder durch eine Düsenfahreinheit mit den Merkmalen des Anspruches 12 gelöst.

Die Spritzgießeinheit weist mindestens eine Düsenfahreinheit auf, um im Betriebszustand eine Düse der Spritzgießeinheit an eine Spritzgießform und/oder einen Formträger anzulegen. Die mindestens eine Düsenfahreinheit ist im Betriebszustand, die Düse in Anlage drückend und/oder ziehend, so einbaubar, dass sie die Spritzgießeinheit mit der Düse in Anlage an die Spritzgießform und/oder den Formträger drückt und/oder zieht. Die Spritzgießeinheit weist weiterhin ein Aufnahmeelement auf, an dem einerseits der Plastifizierzylinder aufnehmbar ist und andererseits Antriebseinheiten der Spritzgießeinheit befestigbar sind, wobei die mindestens eine Düsenfahreinheit im Bereich des Aufnahmeelements mit der Spitzgießeinheit wirkverbunden ist. Dabei ist die mindestens eine Düsenfahreinheit eine an der Spritzgießeinheit und dem relativ zur Spritzgießeinheit stationären Teil gelagerte bauliche Einheit, die aus einer die Spritzgießeinheit in die Anlage drückenden Stellung aus Sicht des Plastifizierzylinders hinter dem Aufnahmeelement in eine die Spritzgießeinheit in die Anlage ziehende Stellung vor dem Aufnahmeelement überführbar ist. Dies ermöglicht vorteilhaft einen modularen Aufbau. Dadurch ergibt sich eine modulare Einbausituation am Aufnahmeelement, sodass bei einer kostenoptimierten Einstiegsmaschine eine günstige Lösung mit asymmetrischer Düsenanlagekraft möglich ist. Benötigt ein Kunde eine höhere Präzision, kann er wahlweise und ggf. auch später auf eine symmetrische Version wechseln, in der die Düsenfahreinheit weiterhin verwendet werden kann und dann z.B. in eine ziehende Position vor dem Aufnahmeelement überführbar ist.

Vorteilhafte Weiterbildungen sind Gegenstand der abhängigen Patentansprüche. Die in den Patentansprüchen einzeln aufgeführten Merkmale sind in technologisch sinnvoller Weise miteinander kombinierbar und können durch erläuternde Sachverhalte aus der Beschreibung und durch Details aus den Figuren ergänzt werden, wobei weitere Ausführungsvarianten der Erfindung aufgezeigt werden.

Bevorzugterweise ist die Spritzgießeinheit an wenigstens einer, vorzugsweise an zwei am Maschinenständer angeordneten Linearführungen beweglich gelagert. Die Linearführungen sind parallel zur Spritzachse angeordnet und erlauben damit ein Verlagern der Spritzgießeinheit insbesondere durch Betätigung der mindestens einen Düsenfahreinheit. Durch die Linearführungen ist die Spritzgießeinheit auf dem Maschinenständer vorteilhaft stabil und präzise geführt, wobei insbesondere dynamische Längs- und Torsionskräfte aufgenommen werden. Durch die wahlweise Positionierung des Antriebs im hinteren Bereich der Spritzgießeinheit und Abstützung am hinteren Ende des Maschinenständers entsteht vorteilhaft bei der Reinigung im Ausspritzbereich am Formträger keine verschmutzungsanfällige Lösung, weil dort auf eine Ankopplung verzichtet wird. Vorteilhaft ist damit auch kein Antrieb zwischen Maschinenständer und Plastifiziereinheit verbaut, sodass der gesamte Bereich für Einbaulösungen im Maschinenständer sowohl bei der Montage als auch bei Service- und Wartungsaufgaben eine volle Zugänglichkeit ermöglicht. Die damit aus Sicht des Formträgers nach hinten gerichtete Anordnung der Krafteinleitung ermöglicht vorteilhaft einen optimalen Zugang im vorderen Bereich der Spritzgießeinheit, also im Bereich der Plastifiziereinheit und dem darunterliegenden Bauraum am Maschinenständer. Dieser Bauraum bzw. Freiraum zwischen dem Formträger und dem Aufnahmeelement kann so vorteilhaft optimal für den Einbau zum Beispiel von Antriebstechnik, Schaltschrank oder Peripherie genutzt werden und ist auch für Service- und Wartungsaufgaben gut zugänglich. Die oben genannten Vorteile des freien Bauraums unter dem Plastifizierzylinder können auch dadurch erreicht werden, dass die mindestens eine Düsenfahreinheit in den vorderen Bereich der Spritzgießeinheit verlagert wird, wobei sie für eine asymmetrische Düsenanlage im Betriebszustand ziehend an einer Kopplungsstelle des Aufnahmeelements und an dem stationären Formträger befestigbar ist.

Vorzugsweise stützt sich das Aufnahmeelement über eine weitere Lagerung axial beweglich entlang den Linearführungen ab. Die mindestens eine Düsenfahreinheit greift dabei am Aufnahmeelement oder an der weiteren Lagerung an. Dadurch ist eine zuverlässige Krafteinleitung vorteilhaft gewährleistet.

Bevorzugterweise weist die weitere Lagerung unter dem Aufnahmeelement wenigstens ein Entkopplungselement auf und/oder ist als Entkopplungselement ausgebildet. Die Entkopplung leitet insbesondere asymmetrisch zur Spritzachse angreifende Kräfte ab. Um dies zu erreichen, können Aufnahmeelement und weitere Lagerung einerseits einteilig, stabil und verwindungssteif ausgeführt werden, um vorteilhaft eine so steife Verbindung herzustellen, dass keine Verformung aufgrund einer asymmetrischen Düsenanlagekraft an der Aufnahme für den Plastifizierzylinder ankommt. Ebenso ist es auch möglich, Aufnahmeelement und weitere Lagerung mehrteilig auszubilden, um dadurch eine variable bzw. elastische Lagerung zu erreichen, um eine Nachgiebigkeit bzw. einen Verwindungsausgleich in der Verbindung herzustellen. Dabei soll vorteilhaft erreicht werden, dass eine mögliche Verformung insbesondere aufgrund der asymmetrischen Düsenanlagekraft an der Aufnahme des Plastifizierzylinders bzw. in der Dosierachse nicht mehr ankommt.

Bevorzugt sind das Aufnahmeelement und die weitere Lagerung mehrteilig ausgestaltet, wobei die weitere Lagerung ein einstückig mit ihr verbundenes Lagerelement aufweist und das Aufnahmeelement eine Ausnehmung aufweist, in die das Lagerelement aufgenommen ist. Dadurch ist einerseits eine variable/elastische Lagerung des Plastifizierzylinders und der Antriebseinheiten der Spritzgießeinheit ermöglicht. Andererseits wird somit auch eine Nachgiebigkeit bzw. ein Verbindungsausgleich in der Verbindung zwischen Aufnahmeelement und weiterer Lagerung hergestellt, damit eine eventuelle Verformung aufgrund einer asymmetrischen Düsenanlagekraft nicht mehr an der Aufnahme für den Plastifizierzylinder bzw. in der Dosierachse ankommt.

Vorzugsweise sind die Linearführungen auf dem Maschinenständer an quer zu den Linearführungen verlaufenden Lagerschienen verstellbar gelagert. Dies erfolgt vorzugsweise über zwei Lagerschienen, die vorne und hinten angeordnet sind. Durch die damit gegebene Verstellbarkeit der Linearführungen können alle fertigungsbedingten Toleranzen von Spritzgießeinheit und Maschinenständer über eine einfache Justage optimal an die jeweiligen die Bedürfnisse angepasst werden.

Bevorzugt kann die mindestens eine Düsenfahreinheit, die im Betriebszustand drückend eingebaut ist, zumindest teilweise in der Ebene der Linearführung angeordnet sein und/oder die mindestens eine Düsenfahreinheit, die im Betriebszustand ziehend eingebaut ist, kann zumindest teilweise auf der Höhe des Plastifizierzylinders angeordnet sein. Damit ist jeweils sowohl eine weitestgehend optimierte Krafteinleitung als auch die Schaffung eines Freiraums unter dem Plastifizierzylinder mit den oben erwähnten Vorteilen ermöglicht.

Grundsätzlich können in der ziehenden Stellung und/oder in der drückenden Stellung auch mehrere Düsenfahreinheiten vorgesehen sein, die vorzugsweise symmetrisch zur Spritzachse angeordnet sind. In diesem Fall können in einem definierten Abstand zur Spritzachse z.B. zwei Düsenfahreinheiten angeordnet werden, die symmetrisch parallel angesteuert werden und so eine konzentrische Krafteinleitung bewirken, die vorteilhaft für eine höchste Präzision in der Bewegung von Spezialdüsen nutzbar ist.

Vorteilhaft ist das Aufnahmeelement so ausgestaltet, dass die wenigstens eine Düsenfahreinheit sowohl für eine asymmetrische Düsenanlage als auch für eine symmetrische Düsenanlage daran befestigbar ist. Das Aufnahmeelement kann dazu vorteilhaft geometrisch mit minimalem Zusatzaufwand so modular ausgeführt werden, dass für eine zentrale Krafteinleitung in der horizontalen mittigen Position der Plastifiziereinheit zwei Düsenfahreinheiten, wie zum Beispiel Hydraulikzylinder, angeordnet werden. Aufgrund der minimalen zusätzlichen Bearbeitung am Aufnahmeelement bzw. der weiteren Lagerung können beide Kopplungsstellen (zum Beispiel für eine drückende oder ziehende Betätigung) vorgehalten werden, was auch einen nachträglichen Austausch der einfachen Lösung durch die verbesserte Lösung erlaubt. Die als bauliche Einheit ausgebildete Düsenfahreinheit kann dabei wiederverwendet werden.

Die oben genannten Vorteile ergeben sich auch bei einer Düsenfahreinheit, die im Betriebszustand drückend und/oder ziehend so einbaubar ist, dass sie die Spritzgießeinheit mit der Düse in Anlage an die Spritzgießform und/oder den Formträger drückt und/oder zieht. Dabei ist die Düsenfahreinheit eine bauliche Einheit, die dazu eingerichtet ist, aus einer die Spritzgießeinheit in die Anlage drückenden Stellung in eine die Spritzgießeinheit in die Anlage ziehende Stellung überführbar zu sein.

Als vorteilhaft hat sich bei diesen Lösungen eines modularen Düsenanlagekraftkonzeptes herausgestellt, dass je nach Kundenanforderung optimale Lösungen auf einer identischen Grundplattform, die insbesondere durch die Ausgestaltung des Aufnahmeelements gebildet ist, verwirklicht werden können. Neben der damit gegebenen Kundensicht ist auch eine Ressourcenschonung, Gleichteilverwendung und optimale Zugänglichkeit vorteilhaft gewährleistet.

### Kurzbeschreibung der Figuren

Im Folgenden wird die Erfindung an Hand von in den beigefügten Figuren dargestellten Ausführungsbeispielen näher erläutert. Es zeigen:
- Fig. 1: eine schematische, dreidimensionale Darstellung einer auf eine Maschinenständer angeordneten Spritzgießeinheit einer Spritzgießmaschine,
- Fig. 2: eine isometrische vergrößerte Ansicht der Spritzgießeinheit gemäß Fig. 1,
- Fig. 2a: eine vergrößerte Schnittdarstellung in Richtung des Pfeils A von Fig. 2 mit zentrisch angeordneter Düsenfahreinheit,
- Fig. 3: eine isometrische Ansicht einer alternativen Ausführungsform der Spritzgießeinheit gemäß Fig. 2 mit beidseits entlang des Plastifizierzylinders angeordneten Düsenfahreinheiten,
- Fig. 3a: eine Draufsicht auf die Spritzgießeinheit gemäß Fig. 3 in Richtung des Pfeils B von Fig. 3,
- Fig. 4a - 4d: isometrische Ansichten verschiedener einteiliger Ausführungsbeispiele einer vorderen Abstützung der Spritzgießeinheit,
- Fig. 5a, 5b: isometrische Ansichten verschiedener mehrteiliger Ausführungsbeispiele einer vorderen Abstützung der Spritzgießeinheit,

### Beschreibung bevorzugter Ausführungsbeispiele

Die Erfindung wird jetzt beispielhaft unter Bezug auf die beigefügten Zeichnungen näher erläutert. Allerdings handelt es sich bei den Ausführungsbeispielen nur um Beispiele, die nicht das erfinderische Konzept auf eine bestimmte Anordnung beschränken sollen. Bevor die Erfindung im Detail beschrieben wird, ist darauf hinzuweisen, dass sie nicht auf die jeweiligen Bauteile der Vorrichtung sowie die jeweiligen Verfahrensschritte beschränkt ist, da diese Bauteile und Verfahren variieren können. Die hier verwendeten Begriffe sind lediglich dafür bestimmt, besondere Ausführungsformen zu beschreiben und werden nicht einschränkend verwendet. Wenn zudem in der Beschreibung oder in den Ansprüchen die Einzahl oder unbestimmte Artikel verwendet werden, bezieht sich dies auch auf die Mehrzahl dieser Elemente, solange nicht der Gesamtzusammenhang eindeutig etwas Anderes deutlich macht.

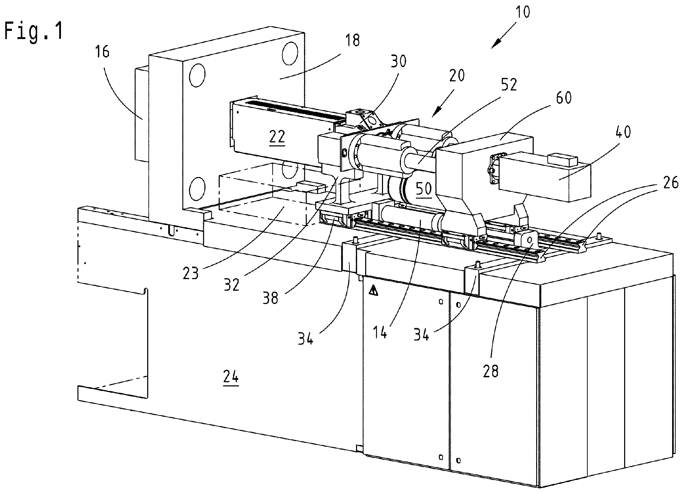

Fig. 1 zeigt eine perspektivische Ansicht eines Teils einer Maschine zur Verarbeitung von Kunststoffen und anderer plastifizierbarer Massen, wie insbesondere pulverförmige und/oder keramische Massen. Es kann sich dabei um einen Kunststoff-Spritzgießmaschine handeln. Erkennbar ist eine auf einem Maschinenständer 24 angeordnete Spritzgießeinheit 20, die an einem vorzugsweise stationären Formträger 18 einer im Übrigen zeichnerisch nicht dargestellten Formschließeinheit einer Spritzgießmaschine festsetzbar ist.

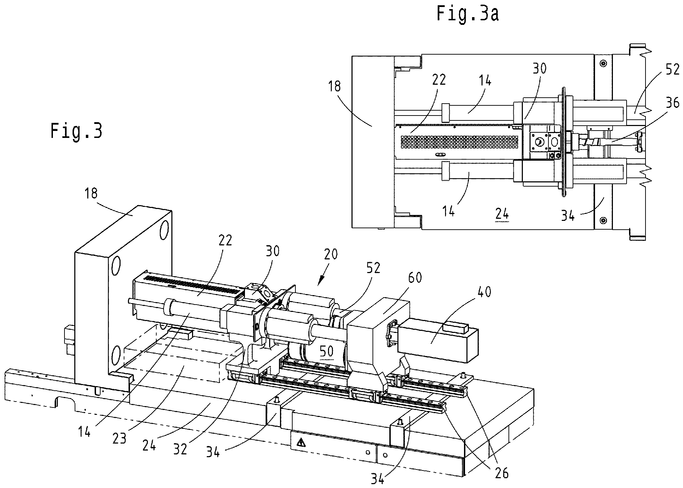

Aufbau und Betrieb einer Spritzgießmaschine sind der Fachperson grundsätzlich bekannt. Einer Spritzgießeinheit 20 der Maschine werden Kunststoffe oder andere plastifizierbare Materialien zugeführt, die in einem Plastifizierzylinder 22 gemischt, plastifiziert und homogenisiert werden. Hierzu ist im Plastifizierzylinder 22 ein zeichnerisch nicht dargestelltes Förderelement 36 (Fig. 3a) wie z. B. eine Förderschnecke oder ein anderes geeignetes Fördermittel vorgesehen. Während des Plastifizierungsvorgangs wird im Falle einer Förderschnecke diese durch einen Dosierantrieb 40 rotiert, wobei vor dem Förderelement 36 plastifiziertes Material aufdosiert wird. Im Anschluss wird durch eine durch einen Einspritzantrieb 50 veranlasste Axialbewegung des Förderelements 36 entlang einer Spritzachse a-a das plastifizierte Material in einen zeichnerisch nicht dargestellten Formhohlraum einer Spritzgießform 16 eingespritzt, die sich in Fig. 1 auf der linken Seite auf der Rückseite des Formträgers 18 befindet. In diesem Moment ist die Spritzgießform 16 durch die Formschließeinheit geschlossen. Sobald das eingespritzte plastifizierte Material im Formhohlraum ausgehärtet ist, wird mittels der Formschließeinheit die Spritzgießform 16 wieder geöffnet, so dass das hergestellte Spritzteil entnommen werden kann. Dieser Prozess erfolgt zyklisch.

In Fig. 1 ist rechts vom im Ausführungsbeispiel stationären Formträger 18 eine Spritzgießeinheit 20 der Spritzgießmaschine 10 vorgesehen. Diese Spritzgießeinheit weist ein mittiges Aufnahmeelement 30 auf, an dem in Richtung auf den Formträger 18 ein Plastifizierzylinder 22 aufgenommen ist. Aus Sicht des Formträgers 18 ist hinter dem Aufnahmeelement 30 ein hinteres Aufnahmeelement 60 vorgesehen, in dem im Ausführungsbeispiel zeichnerisch nicht dargestellte Getriebe vorgesehen sind. Über diese Getriebe treiben ein Dosierantrieb 40 und ein Einspritzantrieb 50 die Förderschnecke 36 (Fig. 3a) an.

Im Ausführungsbeispiel ist unter der Spritzgießeinheit 20 eine Düsenfahreinheit 14 vorgesehen. Diese legt im Betriebszustand der Spritzgießmaschine 10 eine Düse 12 der Spritzgießeinheit 20 an eine Spritzgießform 16 und/oder den Formträger 18 an. Die mindestens eine Düsenfahreinheit 14 ist einerseits an der Spritzgießeinheit 20, im Ausführungsbeispiel am einem Führungswagen 38, unter dem Aufnahmeelement 30 und andererseits an einem relativ zur Spritzgießeinheit 20 stationären Teil der Spritzgießmaschine 10 gelagert, im Ausführungsbeispiel an der Abstützung 28. Die Düsenfahreinheit 14 kann aber ebenso am Aufnahmeelement 30 oder dessen Lagerung 32 im Bereich des Aufnahmeelements angreifen. Grundsätzlich können auch mehrere Düsenfahreinheiten vorgesehen sein.

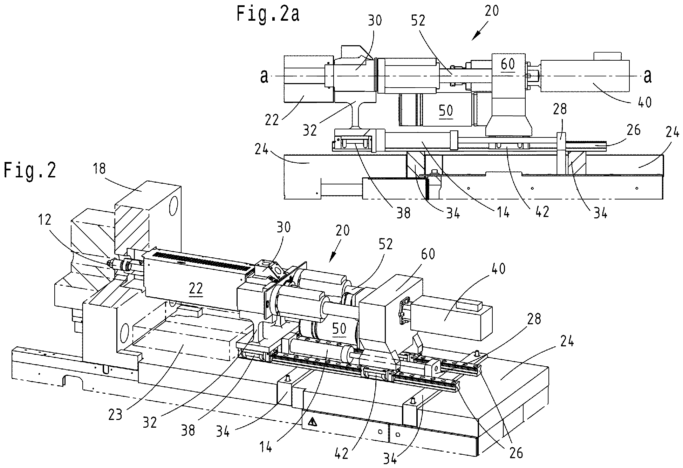

Ausgehend von der Abstützung 28 drückt die Düsenfahreinheit 14 bei Betätigung zur Anlage der Düse 12 über Führungswagen 38, weitere Lagerung 32 und Aufnahmeelement 30 die gesamte Spritzgießeinheit 20 in Richtung auf den Formträger 18 und damit die Düse 12 in Anlage an die Spritzgießform und/oder den Formträger 18. Um diese Bewegung der Spritzgießeinheit 20 entlang der Spritzachse a-a zu ermöglichen, ist die Spritzgießeinheit im Ausführungsbeispiel auf Linearführungen 26 axial beweglich gelagert. Fig. 2 zeigt auch, dass die Spritzgießeinheit 20 im Ausführungsbeispiel an zwei Linearführungen 26 beweglich gelagert ist. Diese wenigstens eine Linearführung 26 ist parallel zu einer Spritzachse a-a der Spritzgießeinheit angeordnet. Entlang der Linearführung wird die Spritzgießeinheit 20 durch Betätigung der Düsenfahreinheit 14 axial verlagert.

Fig. 2 zeigt einen vergrößerten Ausschnitt aus Fig. 1 im Bereich der Spritzgießeinheit 20. Erkennbar ist dort, dass am Aufnahmeelement 30 einerseits der Plastifizierzylinder 22 aufnehmbar ist und andererseits die Antriebseinheiten der Spritzgießeinheit angreifen bzw. befestigbar sind. Im Ausführungsbeispiel sind hierzu Spindelantriebe 52 vorgesehen, die von den Antriebseinheiten entsprechend betätigt werden.

Als Antriebseinheiten kommen grundsätzlich hydraulische, elektromechanische, pneumatische oder auch andere Antriebseinheiten in Betracht. Ebenso kann die mindestens eine Düsenfahreinheit 14 nicht nur wie im Ausführungsbeispiel hydraulisch angetrieben sein, sondern ebenso elektromechanisch, pneumatisch oder auf geeignete andere Weise.

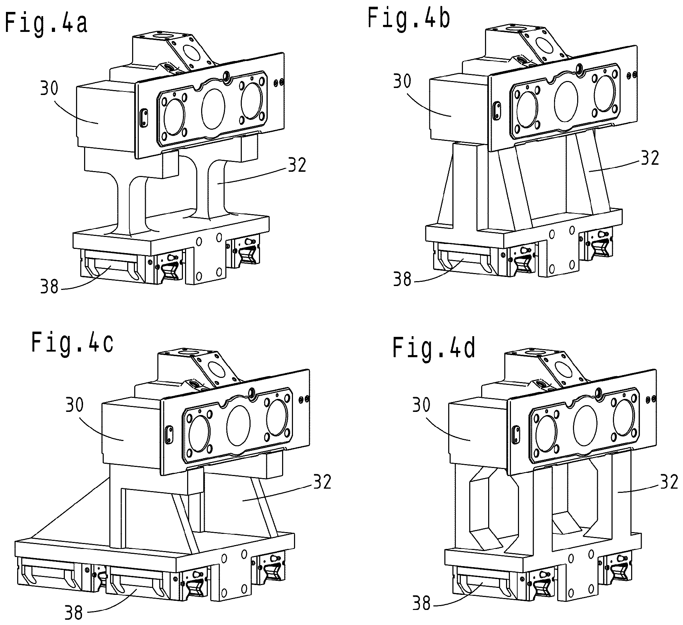

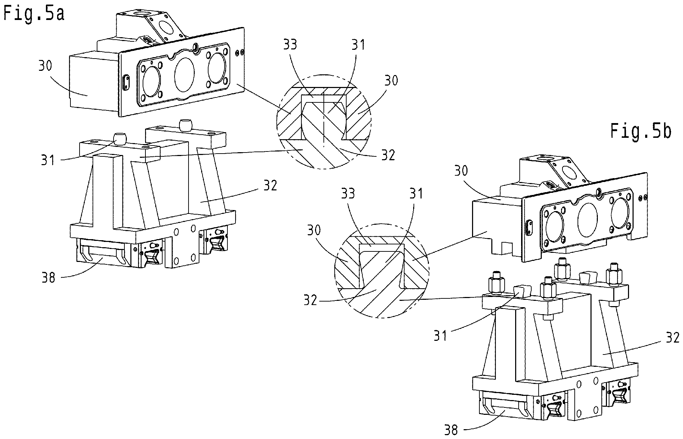

Im Ausführungsbeispiel der Fig. 1, 2 greift die Düsenfahreinheit 14 asymmetrisch, d.h. gegenüber der Spritzachse a-a nach unten versetzt an. Grundvoraussetzung für eine derart asymmetrische Düsenanlagekraft ist eine stabile, verbindungsteife Anbindung der Spritzgießeinheit 20 an die Linearführungstechnik, die ortsfest auf dem Maschinenständer 24 verbaut ist. Vorzugsweise wird sowohl das Aufnahmeelement 30 als auch das translatorisch im Spritzgießprozess bewegliche hintere Aufnahmeelement 60 mit darin angeordnetem Getriebe mit einer Fußgeometrie ausgestattet, die von der Dimensionierung und geometrischen Ausgestaltung insbesondere in Form von Entkopplungselementen so ausgelegt ist, dass die asymmetrisch angreifenden Kräfte optimal ins Führungssystem der Linearführung 26 abgeleitet werden. Damit kommt es dann im Aufnahmeelement 30 für den Plastifizierzylinder und den Dosierantrieb zu keiner funktional beeinträchtigenden Verformung mehr. Hierauf wird unten im Hinblick auf die Fig. 4a bis 4d und 5a, 5b nochmals näher eingegangen.

Gemäß Fig. 2a sind die Linearführungen 26 auf dem Maschinenständer 24 an quer zu den Linearführungen verlaufenden Lagerschienen 34 verstellbar gelagert. Im Ausführungsbeispiel erfolgt die Lagerung der Spritzgießeinheit 20 an diesen Lagerschienen 34 in einem vorderen und einem hinteren Bereich, d. h. an zwei Lagerschienen 34. Durch die Verstellbarkeit dieser Lagerschienen 34 können alle fertigungsbedingten Toleranzen von Spritzgießeinheit 20 und Maschinenständer 24 bzw. Unterbau über eine einfache Justage optimal auf die Prozessbedürfnisse angepasst werden.

Im Ausführungsbeispiel der Fig. 2, 2a befindet sich die Düsenfahrereinheit 14 etwa oder zumindest teilweise in der Ebene der Linearführungen 26. Sie ist an dieser Stelle an den entsprechenden Lagerstellen einbaubar und damit auch an anderer Stelle zu verwenden. In dem Zwischenraum zwischen den Linearführungen 26 ist sie zwischen Abstützung 28 und ihrer Lagerung im Bereich des Aufnahmeelement 30, im Ausführungsbeispiel am Führungswagen 38 aufnehmbar. Dies ist eine günstige Lösung, die die Düsenanlagekraft asymmetrisch in das System einleitet. Erkennbar ist die gute Anbindung zum Plastifizierzylinder 22 und dem vorderen Bereich am Maschinenständer 24.

Da die Düsenfahreinheit 14 als bauliche Einheit ausgebildet ist, kann sie aber auch leicht in eine Stellung gemäß Fig. 3, 3a versetzt werden, in der sie aus der in Fig. 2 drückenden Stellung in eine in Fig. 3 ziehende Stellung überführt wird. In der ziehenden Stellung zieht sie bei Betätigung das Aufnahmeelement 30 in Richtung auf den Formträger 18. Die Düsenfahreinheit 14 kann also ziehend und/oder drückend eingesetzt werden.

Im Ausführungsbeispiel der Fig. 3 sind zwei Düsenfahreinheiten 14 vorgesehen, die vorzugsweise symmetrisch zur Spritzachse a-a angeordnet sind. Diese Düsenfahreinheiten 14, die im Ausführungsbeispiel durch Hydraulikzylinder gebildet sind, jedoch ebenso elektromechanisch, pneumatisch oder auch auf andere geeignete Weise angetrieben werden können, werden symmetrisch und parallel angesteuert und erzeugen so eine konzentrische Krafteinleitung, die für eine höchste Präzision in der Bewegung insbesondere von Spezialdüsen geeignet ist. Mit anderen Worten wandert die bauliche Einheit aus der günstigen asymmetrischen Stellung mit gegebenenfalls nur einer Düsenfahreinheit 14 nach oben an die Kopplungsstellen, wobei gegebenenfalls eine weitere bauliche Einheit vorgesehen sein kann, um die gewünschte symmetrische Düsenanlagekraft zu bewirken.

Grundsätzlich ist es in beiden Stellungen, d. h. sowohl in der ziehenden Stellung als auch in der drückenden Stellung möglich, mehrere Düsenfahreinheiten 14 vorzusehen. Ebenso wäre es möglich, mindestens eine Düsenfahreinheit 14 in einer ziehenden Stellung und mindestens eine in einer drückenden Stellung, d. h. beide Lösungen kombiniert vorzusehen, sofern dies erwünscht ist.

Vorzugsweise ist das Aufnahmeelement 30 so ausgestaltet, dass Düsenfahreinheiten 14 sowohl für eine asymmetrische Düsenanlage als auch für eine symmetrische Düsenanlage daran befestigbar sind. Dies bedeutet, dass das Aufnahmeelement 30 geometrisch mit minimalem Zusatzaufwand so modular ausgeführt ist, dass bedarfsweise die eine oder die andere Stellung ohne weiteres eingenommen werden kann. Diese modulare Einbausituation am Aufnahmeelement 30 bietet in einer kostenoptimierten Einstiegsmaschine eine günstige Lösung mit asymmetrischer Düsenanlagekraft. Benötigt ein Kunde eine höhere Präzision, kann er wahlweise ggf. auch später auf die symmetrische Version wechseln. Aufgrund der minimalen zusätzlichen Bearbeitung am Aufnahmeelement bzw. seiner Abstützung können beide Kopplungsstellen vorgehalten werden. Dies erlaubt auch einen nachträglichen Austausch beim Kunden.

Insbesondere der Vergleich zwischen Fig. 2a und Fig. 3a zeigt die damit gegebenen Möglichkeiten. In Fig. 2a befindet sich die Düsenfahreinheit 14 unterhalb der Spritzgießeinheit 20 zwischen den Linearführungen 26 und ist an Aufnahmeelement 30 und Abstützung 28 gelagert. Dieselbe Einheit kann umgesetzt werden in eine Stellung gemäß Fig. 3a, in der die Düsenfahreinheit 14 auf der dem Formträger 18 zugewandten Seite des Aufnahmeelement 30 lagerbar ist. Andernends wird die Düsenfahreinheit 14 am Formträger 18 gelagert.

Durch die vorliegende Offenbarung wird ein modulares Düsenanlagekraftkonzept gezeigt, mit dem sich je nach Kundenanforderung optimale Lösungen auf der identischen Grundplattform, gebildet im Wesentlichen durch das Aufnahmeelement 30 und seine zugehörige Abstützung realisieren lassen. Neben der Kundensicht wird auch das Thema Ressourcenschonung, Gleichteilverwendung und optimale Zugänglichkeit in den Fokus gerückt.

Durch die Positionierung der mindestens einen Düsenfahreinheit 14 zwischen dem Aufnahmeelement 30, den Linearführungen 26 und der Abstützung 28 hinten, zumindest teilweise in der Ebene der Linearführungen 26, und/oder zwischen dem Aufnahmeelement 30 und dem Formträger 18, der als Abstützung dient, zumindest teilweise auf der Höhe des Plastifizierzylinders, entsteht im Bereich der Ausspritzposition am Formträger 18 keine verschmutzungsanfällige Lösung, weil gänzlich auf eine Kopplung verzichtet werden kann. Stattdessen entsteht hier ein - in den Fig. 1, 2 und 3 gestrichelt dargestellter - Freiraum 23 zwischen dem Formträger 18 und dem Aufnahmeelement 30 unter dem Plastifizierzylinder 22. Neben der Verschmutzungsthematik ergibt sich ein weiterer wesentlicher Vorteil dadurch, dass kein Antrieb zwischen Maschinenständer 24 und Plastifizierzylinder 22 verbaut ist, indem der ganze Bereich für Einbaulösungen im Maschinenständer 24 sowohl in der Montage als auch bei Service- und Wartungsaufgaben eine volle Zugänglichkeit ermöglicht.

Fig. 4a bis 4d sowie Fig. 5a, 5b zeigen Entkopplungselemente, die vorzugsweise im Bereich der weiteren Lagerung 32 unter dem Aufnahmeelement 30 vorgesehen sind. Das Entkopplungselement ist dazu eingerichtet, asymmetrisch zur Spritzachse a-a angreifende Kräfte abzuleiten.

In Fig. 4a bis 4d wird eine asymmetrisch eingeleitete Anlagekraft über eine dafür ausgeformte Fuß-/Abstützgeometrie in den Unterbau über die Linearführung 26 eingeleitet. Damit soll verhindert werden, dass die außermittig eingeleitete Kraft eine Verformung an den Einspritzstrang überträgt, was zu negativen Einflüssen im Spritzgießprozess führen könnte. In diesen Figuren werden Aufnahmeelement 30 und weitere Lagerung 32 einteilig ausgebildet und damit stabil und verwindungssteif ausgeführt, um möglichst eine so steife Verbindung herzustellen, dass keine Verformung aufgrund der asymmetrischen Düsenanlagekraft am Aufnahmeelement 30 und an der Aufnahme des Plastifizierzylinders 22 ankommt. Vorzugsweise wird diese Verbindung bis zum Führungswagen 38 geführt. Eine analoge Führung könnte auch am hinteren Aufnahmeelement 60 mit Führungswagen 42 vorgesehen sein.

Diese Lösung muss aber nicht einteilig erfolgen, sondern kann ebenfalls über geeignete Fügetechnik aus Fertigungs- und Ressourcensicht mehrteilig ausgeführt sein. Die Fig. 4a bis 4d zeigen verwindungssteife Lösungen, die durch unterschiedliche Ausgestaltungen verhindern, dass die asymmetrischen Kräfte sich auf den Spritzprozess der Spritzachse a-a auswirken.

In Fig. 4a ist die weitere Lagerung 32 in Form eines Doppel-T-Trägers ausgeführt. In Fig. 4b und 4c erfolgt eine Abstützung über angeflanschte Versteifungselemente wie z.B. Knotenbleche, um die weitere Lagerung 32 möglichst steif auszugestalten. Dem gleichen Zweck dient die Rahmenstruktur der weiteren Lagerung 32 gemäß Fig. 4d. Das Ziel ist bei diesen Lösungen, durch asymmetrisch auftretende Kräfte infolge einer entsprechend konstruktiv erreichten Steifigkeit keine Prozessbeeinflussung zuzulassen.

Die Lösungen gemäß Fig. 5a, 5b beschreiten den Weg, Aufnahmeelement 30 und weitere Lagerung 32 mehrteilig auszugestalten, wobei eine variable/elastische Lagerung durch ein Lagerelement 31 vorgesehen ist, das in eine Ausnehmung 33 des Aufnahmeelements 30 eintaucht. Das Ziel ist hier, eine Nachgiebigkeit bzw. einen Verbindungsausgleich in der Verbindung zwischen Aufnahmeelement 30 und weitere Lagerung 32 herzustellen, damit eine eventuelle Verformung aufgrund einer asymmetrischen Düsenanlagekraft nicht mehr an der Aufnahme für den Plastifizierzylinder bzw. in der Dosierachse ankommt.

Diese technischen Ausgestaltungen ermöglichen es, die translatorischen Bewegungskräfte direkt von der asymmetrischen Düsenkrafteinleitung in die Spritzachse a-a oben zu übertragen. Durch die Ausgestaltung der Lagerelemente 31 als balliges bzw. konisches Element wird technisch quasi ein Drehpunkt realisiert, der die auftretenden Biegekräfte bedingt durch die asymmetrische Krafteinleitung ausgleicht und nicht an die Prozessachse übergibt.

Eine Erhöhung der gesamten Steifigkeit der Spritzgießeinheit 20 ist zudem durch den Einsatz mehrerer Führungswagen, im Ausführungsbeispiel die Führungswagen 38 und 42 möglich.

### Bezugszeichenliste

- 10: Spritzgießmaschine
- 12: Düse
- 14: Düsenfahreinheit
- 16: Spritzgießform
- 18: Formträger
- 20: Spritzgießeinheit
- 22: Plastifizierzylinder
- 23: Freiraum
- 24: Maschinenständer
- 26: Linearführung
- 28: Abstützung
- 30: Aufnahmeelement
- 31: Lagerelement
- 32: weitere Lagerung
- 33: Ausnehmung
- 34: Lagerschiene
- 36: Fördermittel
- 38, 42: Führungswagen
- 40: Dosierantrieb
- 50: Einspritzantrieb
- 52: Spindel
- 60: hinteres Aufnahmeelement
- a-a: Spritzachse

## Patentansprüche

1. Spritzgießeinheit (20) für eine Maschine (10) zur Verarbeitung von Kunststoffen und anderen plastifizierbaren Materialien, insbesondere für eine Spritzgießmaschine, eingerichtet zum Zuführen von in einem Plastifizierzylinder (22) plastifizierten Material in eine Spritzgießform (16), die zwischen Formträgern (18) aufnehmbar ist, mit
wobei die Spritzgießeinheit (20) mindestens eine Düsenfahreinheit (14) aufweist, die dafür eingerichtet ist, im Betriebszustand der Spritzgießmaschine (10) eine Düse (12) der Spritzgießeinheit (20) an eine Spritzgießform (16) und/oder einen Formträger (18) anzulegen,
wobei die mindestens eine Düsenfahreinheit (14) einerseits an der Spritzgießeinheit (20) und andererseits an einem relativ zur Spritzgießeinheit (20) stationären Teil der Spritzgießmaschine (10) lagerbar ist,
**dadurch gekennzeichnet,**
**dass** die mindestens eine Düsenfahreinheit (14) im Betriebszustand drückend und/oder ziehend so einbaubar ist, dass sie die Spritzgießeinheit mit der Düse (12) in Anlage an die Spritzgießform (16) und/oder den Formträger (18) drückt und/oder zieht,
**dass** die mindestens eine Düsenfahreinheit (14) im Bereich eines Aufnahmeelements (30) mit der Spitzgießeinheit (20) wirkverbunden ist und
**dass** die mindestens eine Düsenfahreinheit (14) eine an der Spritzgießeinheit (20) und dem relativ zur Spritzgießeinheit (20) stationären Teil gelagerte bauliche Einheit ist, die aus einer die Spritzgießeinheit (20) in die Anlage drückenden Stellung aus Sicht des Plastifizierzylinders (22) hinter dem Aufnahmeelement (30) in eine die Spritzgießeinheit (20) in die Anlage ziehende Stellung vor dem Aufnahmeelement (30) überführbar ist.

2. Spritzgießeinheit nach Anspruch 1, **dadurch gekennzeichnet, dass** an dem Aufnahmeelement (30) einerseits ein Plastifizierzylinder (22) aufnehmbar ist und andererseits Antriebseinheiten der Spritzgießeinheit (20) befestigbar sind.

3. Spritzgießeinheit nach Anspruch 1 oder 2, **dadurch gekennzeichnet, dass** die Spritzgießeinheit (20) konfiguriert ist, um an wenigstens einer an einem Maschinenständer (24) angeordneten Linearführung (26) parallel zu einer Spritzachse (a-a) der Spritzgießeinheit (20) durch Betätigung der mindestens einen Düsenfahreinheit (14) in Anlage an der Spritzgießform (16) und/oder dem Formträger (18) verlagert zu werden, wobei die mindestens eine Düsenfahreinheit (14) an einer Abstützung (28) am Maschinenständer (24) abgestützt ist.

4. Spritzgießeinheit nach einem der vorhergehenden Ansprüche, **dadurch gekennzeichnet, dass** das Aufnahmeelement (30) über eine weitere Lagerung (32) entlang den Linearführungen (26) axial beweglich abgestützt ist und dass die mindestens eine Düsenfahreinheit (14) an der dem Plastifizierzylinder (22) gegenüberliegenden Seite des Aufnahmeelements (30) am Aufnahmeelement oder an der weiteren Lagerung (32) angreift.

5. Spritzgießeinheit nach Anspruch 4, **dadurch gekennzeichnet, dass** die weitere Lagerung (32) wenigstens ein Entkopplungselement aufweist und/oder als Entkopplungselement ausgebildet ist, das konfiguriert ist, asymmetrisch zur Spritzachse angreifende Kräfte abzuleiten.

6. Spritzgießeinheit nach Anspruch 4 oder 5, **dadurch gekennzeichnet, dass** das Aufnahmeelement (30) und die weitere Lagerung (32) mehrteilig ausgestaltet sind, wobei die weitere Lagerung (32) ein einstückig mit ihr verbundenes Lagerelement (31) aufweist und das Aufnahmeelement (30) eine Ausnehmung (33) aufweist, in die das Lagerelement (31) aufgenommen ist.

7. Spritzgießeinheit nach einem der Ansprüche 3 bis 6, **dadurch gekennzeichnet, dass** die Linearführungen (26) auf dem Maschinenständer (24) an quer zu den Linearführungen verlaufenden Lagerschienen (34) verstellbar gelagert sind.

8. Spritzgießeinheit nach einem der vorhergehenden Ansprüche, **dadurch gekennzeichnet, dass** zwischen dem Formträger (18) und dem Aufnahmeelement (30) unter dem Plastifizierzylinder (22) ein Freiraum (23) vorgesehen ist.

9. Spritzgießeinheit nach einem der vorhergehenden Ansprüche, **dadurch gekennzeichnet, dass** die mindestens eine Düsenfahreinheit (14), die im Betriebszustand drückend eingebaut ist, zumindest teilweise in der Ebene der Linearführung (26) angeordnet ist und/oder dass die mindestens eine Düsenfahreinheit (14), die im Betriebszustand ziehend eingebaut ist, zumindest teilweise auf der Höhe des Plastifizierzylinders (22) angeordnet ist.

10. Spritzgießeinheit nach einem der vorhergehenden Ansprüche, **dadurch gekennzeichnet, dass** in der ziehenden Stellung und/oder in der drückenden Stellung mehrere Düsenfahreinheiten (14) vorgesehen sind, die vorzugsweise symmetrisch zur Spritzachse (a-a) angeordnet sind.

11. Spritzgießeinheit nach einem der vorhergehenden Ansprüche, **dadurch gekennzeichnet, dass** das Aufnahmeelement (30) so ausgestaltet ist, dass die mindestens eine Düsenfahreinheit (14) sowohl für eine asymmetrische Düsenanlage als auch für eine symmetrische Düsenanlage befestigbar ist.

12. Düsenfahreinheit (14) einer Spritzgießeinheit (20) einer Maschine (10) zur Verarbeitung von Kunststoffen und anderen plastifizierbaren Materialien, insbesondere einer Spritzgießmaschine, wobei die Düsenfahreinheit eingerichtet ist zum Anlegen einer Düse (12) an eine Spritzgießform (16) und/oder einen Formträger (18) der Spritzgießmaschine (10),
wobei die Düsenfahreinheit (14) einerseits an der Spritzgießeinheit (20) und andererseits an einer relativ zur Spritzgießeinheit (20) stationären Teil der Spritzgießmaschine (10) lagerbar ist,
**dadurch gekennzeichnet, dass** die Düsenfahreinheit (14) im Betriebszustand drückend und/oder ziehend so einbaubar ist, dass sie dazu eingerichtet ist, die Spritzgießeinheit mit der Düse (12) in Anlage an die Spritzgießform (16) und/oder den Formträger (18) zu drücken und/oder zu ziehen, und
dass die Düsenfahreinheit (14) eine bauliche Einheit ist, die aus einer die Spritzgießeinheit (20) in die Anlage drückenden Stellung in eine die Spritzgießeinheit (20) in die Anlage ziehende Stellung überführbar ist.
